# EUROPÄISCHE PATENTSCHRIFT

(11) **EP 3 599 525 B1**
(45) Veröffentlichungstag und Bekanntmachung des Hinweises auf die Patenterteilung: **05.01.2022**
(21) Anmeldenummer: 19182462.2
(22) Anmeldetag: 26.06.2019
(51) Int. Cl.: G05B 19/418

(54) **VERFAHREN ZUR SICHEREN DATENKOMMUNIKATION AN EINER NUMERISCH GESTEUERTEN WERKZEUGMASCHINE**
METHOD FOR SECURE DATA COMMUNICATION ON A NUMERICALLY CONTROLLED MACHINE TOOL
PROCÉDÉ DE COMMUNICATION SÉCURISÉE DE DONNÉES SUR UNE MACHINE-OUTIL À COMMANDE NUMÉRIQUE

(30) Priorität: 27.07.2018 DE 102018212557
(43) Veröffentlichungstag der Anmeldung: 29.01.2020
(73) Patentinhaber: Dr. Johannes Heidenhain GmbH, 83301 Traunreut (DE)
(72) Erfinder: KÖCK, Josef, 83342 Tacherting (DE); RITZER, Markus, 84549 Engelsberg (DE)

(56) Entgegenhaltungen:
- WO-A1-01/46765
- US-A1- 2003 208 283
- US-A1- 2013 332 529

## Beschreibung

### BEZEICHNUNG DER ERFINDUNG

Verfahren zur sicheren Datenkommunikation an einer numerisch gesteuerten Werkzeugmaschine

### GEBIET DER TECHNIK

Die vorliegende Erfindung betrifft ein Verfahren zur sicheren Datenkommunikation an einer numerisch gesteuerten Werkzeugmaschine. Mit dem Verfahren soll bewirkt werden, dass ein Datentelegramm, das zwischen einer Numerischen Steuerung und den Peripheriegeräten der Werkzeugmaschine ausgetauscht wird, sicher das vorgesehene Ziel erreicht.

### STAND DER TECHNIK

Im Bereich der numerisch gesteuerten Werkzeugmaschinen wird die Kommunikation zwischen der Numerischen Steuerung und den Peripheriegeräten wie Umrichter, Antriebe, Messgeräte, Bremsen, Notaustaster etc. immer mehr über digitale Schnittstellen abgewickelt. Dabei kommen verschiedenste Bussysteme und Übertragungswege zum Einsatz. Im Vergleich zu direkt angeschlossenen Peripheriegeräten, die beispielsweise analoge Messsignale über ein Kabel an die Steuerung abgeben, muss bei einer Kommunikation über ein Datennetzwerk sichergestellt werden, dass ein Datentelegramm immer den jeweils gewünschten Empfänger erreicht.

Aus der EP 1422629 B1 ist es bekannt, an die verschiedenen Maschinenkomponenten eindeutige Identifikationsnummern zu vergeben. Dabei werden verschiedene Information dieser Komponenten wie beispielsweise Seriennummern, Softwarestände, Hersteller- und Leistungsangaben dazu verwendet, eine eindeutige Seriennummer zu erzeugen. Anhand dieser Seriennummer kann jede Komponente eindeutig identifiziert werden.

Als Nachteil erweist sich dabei einerseits, dass sich bei einem Austausch solcher Komponenten die Identifikationsnummer verändern kann, wenn sich die Seriennummer eines Bauteils beim Austausch ändert, und dass dann die neue Seriennummer allen Teilnehmern im Datennetzwerk bekannt gemacht werden muss. Andererseits sind so auch immer noch falsch zugestellte Datentelegramme möglich, falls auf dem jeweiligen Übertragungsweg ein Fehler auftritt.

Aus der US 2003/208283 A1 und aus der WO 01/46765 A1 sind Sicherheitsprotokolleinrichtungen bekannt, mit denen Industriesteuerungen auf eine sichere Art und Weise kommunizieren können.

### ZUSAMMENFASSUNG DER ERFINDUNG

Es ist daher Aufgabe der Erfindung, ein verbessertes Verfahren zur sicheren Datenkommunikation an einer numerisch gesteuerten Werkzeugmaschine anzugeben, mit dem ein falsch zugestelltes Datentelegramm erkannt werden kann.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zur sicheren Datenkommunikation an einer numerisch gesteuerten Werkzeugmaschine offenbart, mit einer als Sender fungierenden Numerischen Steuerung, die über ein digitales Netzwerk zum Austausch von Datentelegrammen mit einer Mehrzahl von als Empfänger fungierenden Peripheriegeräten verbunden ist, denen jeweils eine eindeutige Identifikationsnummer zugeordnet ist. Diese Identifikationsnummer wird sowohl von der Steuerung als auch vom Peripheriegerät für jede Übertragung eines solchen Datentelegramms neu berechnet und ist Bestandteil des Datentelegramms.

Zum Versenden eines Datentelegramms wird somit beim Empfänger eine Erwartungshaltung aufgebaut, mit der geprüft werden kann, ob das Datentelegramm auch den korrekten Empfänger erreicht hat.

Besonders vorteilhaft ist es, wenn das Verfahren außerdem beinhaltet, dass die Identifikationsnummer neben Routing-Informationen über den Weg des Datentelegramms von der Steuerung zum Peripheriegerät auch einen Hashwert über lokale, das Peripheriegerät charakterisierende Daten umfasst.

Damit kann zusätzlich überprüft werden, ob die Parametrierung des Peripheriegerätes mit der von der Numerischen Steuerung vorgesehenen Parametrierung übereinstimmt. Fehlzustellungen oder Fehlparametrierungen können erkannt und entsprechende Reaktionen ausgelöst werden.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: Eine Numerische Steuerung, die über ein Netzwerk mit Peripheriegeräten verbunden ist,
- Figur 2: ein Schema eines Datentelegramms,
- Figur 3: ein Ablaufdiagramm für die Kommunikation zwischen der Numerischen Steuerung und einem Peripheriegerät.

### BESCHREIBUNG DER AUSFÜHRUNGSFORMEN

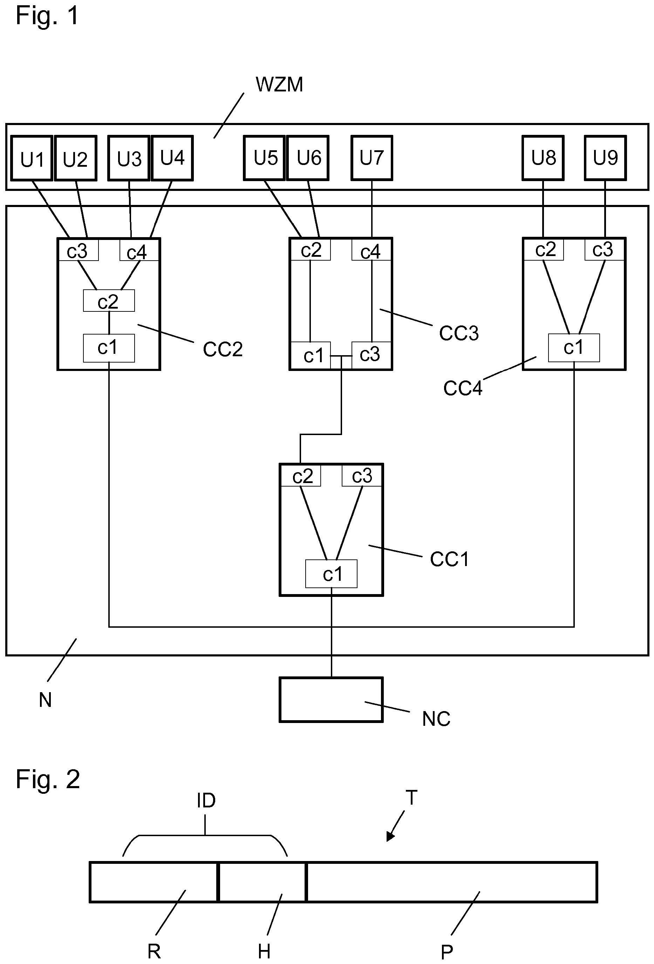

Die Figur 1 zeigt eine Numerische Steuerung NC, die über ein Netzwerk N mit mehreren Peripheriegeräten U1, U2, U3, U4, U5, U6, U7, U8, U9 einer Werkzeugmaschine WZM verbunden ist.

Bei diesen Peripheriegeräten U1, U2, U3, U4, U5, U6, U7, U8, U9 handelt es sich beispielsweise um die Umrichter der verschiedenen beweglichen Achsen der mittels der Numerischen Steuerung NC kontrollierten Werkzeugmaschine WZM. Beispielsweise kann jeder dieser Umrichter U1, U2, U3, U4, U5, U6, U7, U8, U9 ein oder zwei Antriebe ansteuern, die die beweglichen Achsen der Werkzeugmaschine WZM antreiben. Ein Umrichter dient zur Umwandlung des Wechselstroms fester Frequenz aus einem versorgenden Netz in Wechselstrom variabler Frequenz, mit dem beispielsweise ein Synchronmotor unter Lageregelung eine Achse der Werkzeugmaschine WZM bewegen kann.

Den Peripheriegeräten U1, U2, U3, U4, U5, U6, U7, U8, U9 werden von der Numerischen Steuerung NC beispielsweise Parametersätze übermittelt, mit denen die jeweiligen Peripheriegeräte U1, U2, U3, U4, U5, U6, U7, U8, U9 parametriert werden sollen. Solche Parameter können beispielsweise eine maximale Abschaltzeit, eine Zugehörigkeit eines Antriebs zu einer Achsgruppe oder die Teilnahme eines Antriebs an einem Bremsleitungstest sein. Auch die Übermittlung oder Anforderungen von bestimmten Informationen zwischen der Numerischen Steuerung NC und den Peripheriegeräten U1, U2, U3, U4, U5, U6, U7, U8, U9 wird über das Netzwerk N abgewickelt.

Es versteht sich von selbst, dass es auch unter Sicherheitsaspekten sehr wichtig ist, dass eine korrekte Zuordnung eines übermittelten Parameters oder Parametersatzes, oder von Anfragen und Antworten zu und von einem Peripheriegerät U1, U2, U3, U4, U5, U6, U7, U8, U9 der Werkzeugmaschine WZM jederzeit gewährleistet ist.

Das Netzwerk N ist in der Figur 1 höchst schematisch dargestellt. Es umfasst mehrere miteinander vernetzte Geräte CC1, CC2, CC3, CC4, die ihrerseits mehrere Recheneinheiten c1, c2, c3, c4 enthalten, die auch als Datenflusskontrolleinheiten charakterisiert werden können. Diese Datenflusskontrolleinheiten c1, c2, c3, c4 sind innerhalb der Geräte CC1, CC2, CC3, CC4 auf unterschiedliche Weisen miteinander verknüpft, und auch zwischen den Geräten CC1, CC2, CC3, CC4 und zu den Peripheriegeräten U1, U2, U3, U4, U5, U6, U7, U8, U9 sind verschiedenste Datenpfade möglich. Dabei können unterschiedliche Bussysteme und Netzwerktechnologien wie beispielsweise Ethernet oder SPI auch gemischt zum Einsatz kommen.

Die Figur 2 zeigt den Aufbau eines Datentelegramms T, das von der Numerischen Steuerung NC zu den Peripheriegeräten U1, U2, U3, U4, U5, U6, U7, U8, U9 der Werkzeugmaschine WZM gesendet werden soll. Dieses Datentelegramm T enthält eine eindeutige Identifikationsnummer ID, die den Empfänger kennzeichnet, sowie die eigentlichen Nutzdaten P, die zu übermitteln sind.

Wie diese eindeutige Identifikationsnummer ID aufgebaut werden kann, soll im Folgenden beschrieben werden.

Die eindeutige Identifikationsnummer ID umfasst Routing-Informationen R, die den Weg des Datentelegramms T vorschreiben. Diese Routing-Informationen R berücksichtigen die Topologie des Netzwerks N, die dem Sender und dem Empfänger des Datentelegramms T bekannt sein müssen.

Um etwa von der Numerischen Steuerung NC einen Parametersatz an den Umrichter U7 zu senden, kann die Routing-Information R im Klartext und als String "CC1_c1_c2_CC3_c3_c4_U7" in das Datentelegramm eingefügt werden. Um von der Numerischen Steuerung NC aus das den Umrichter U2 zu erreichen, lautet die Routing-Information "CC2_c1_c2_c3_U2". Weitere Beispiele sind anhand der Figur 1 leicht nachzuvollziehen.

Grundgedanke der Erfindung ist nun, dass der Empfänger des Datentelegramms T die Identifikationsnummer ID mit seinem Erwartungswert für diese Identifikationsnummer ID abgleicht. Im Falle der Routing-Information R überprüft der Empfänger also, ob der im Datentelegramm T enthaltene Weg tatsächlich den Weg vom Sender zum Empfänger (also zu ihm selbst) beschreibt, ob also der tatsächliche Empfänger dem gewollten Empfänger entspricht. Ist das nicht der Fall, haben entweder der Sender und/oder der Empfänger falsche Informationen über die Topologie des Netzwerkes N. Dies kann der Fall sein, wenn beispielsweise bei einer Reparatur ein Netzwerkkabel falsch gesteckt wurde.

Erkennt der Empfänger, dass die im Datentelegramm T enthaltene Routing-Information R nicht zu seiner Erwartungshaltung passt, kann eine entsprechende Fehlerreaktion ausgelöst werden. Dies kann die Anforderung einer erneuten Übermittlung des Datentelegramms T oder auch das Anhalten der Werkzeugmaschine sein.

Zur weiteren Erhöhung der Sicherheit des erfindungsgemäßen Verfahrens wird im Sinne eines zweiten, verbesserten Ausführungsbeispiels neben der Routing-Information R auch noch ein Hashwert H als weiterer Bestandteil der Identifikationsnummer ID verwendet. Dieser Hashwert H wird über bestimmte Umgebungsbedingungen des Empfängers gebildet. Diese sehr abstrakt als Umgebungsbedingungen bezeichneten Größen können beispielsweise TypBezeichnungen, Softwarestände oder Leistungsangaben von Hardwarekomponenten sein. Nur einmal vergebene Seriennummern solcher Hardwarekomponenten eigenen sich weniger gut, da diese sich im Servicefall bei einem Komponententausch ändern würden und dann erst allen Teilnehmern bekannt gemacht werden müssten. Ein Tausch gegen ein Ersatzteil des gleichen Typs würde den Hashwert H dagegen nicht verändern. In den Hashwert H können auch bestimmte, besonders schutzwürdige Parameter aufgenommen werden, mit denen ein Peripheriegerät U1, U2, U3, U4, U5, U6, U7, U8, U9 parametriert ist. Wird so ein Parameter ungewollt verändert (z.B. durch einen durch kosmische Strahlung verursachten Speicherfehler), fällt dies bei der nächsten Übertragung eines Telegramms T auf.

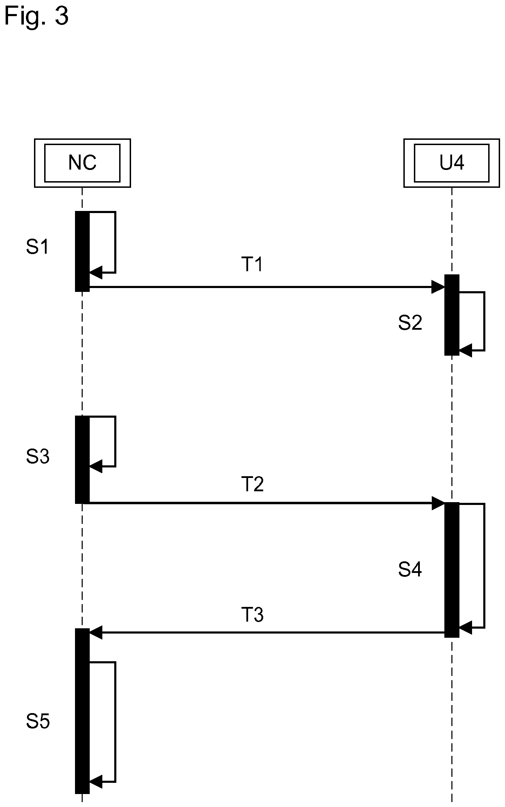

Die Figur 3 zeigt ein Ablaufdiagramm für eine Kommunikation zwischen der Numerischen Steuerung NC und (hier nur als Beispiel für ein Peripheriegerät gewählt) dem Peripheriegerät U4.

Im ersten Schritt S1 wird in der Numerischen Steuerung NC ein Satz von Parametern zusammengestellt, mit dem das Peripheriegerät U4 parametriert werden soll. In einem ersten Datentelegramm T1 werden diese Parameter zum Peripheriegerät U4 übertragen.

Dabei lassen sich auch besonders schutzwürdige Parameter absichern, indem sie in den Haschwert H einbezogen werden. So werden die Peripheriegeräte U1, U2, U3, U4, U5, U6, U7, U8, U9 üblicherweise parametriert, indem man an der Numerischen Steuerung NC einen Satz von Parametern eingibt und an die Peripheriegeräte U1, U2, U3, U4, U5, U6, U7, U8, U9 überträgt. Schon bei der ersten Übertragung dieser Parameter kennt die Steuerung NC die Routinginformationen R und kann auch einen, mehrere oder alle der zu übertragenden Parameter in den Hashwert H einbeziehen. Die empfangende Peripherieeinheit U4 kann sowohl die Routinginformation R als auch den Hashwert H anhand des empfangenen Datentelegramms T1 überprüfen, denn die zur Berechnung des Hashwertes H benötigten Parameter werden ja als Nutzlast P mit diesem Telegramm T1 übertragen.

In einem zweiten Schritt S2 werden die mit dem ersten Datentelegramm T1 übertragenen Parameter in das Peripheriegerät U4 eingespeichert. Von nun an kennen sowohl die Numerische Steuerung NC als auch das Peripheriegerät U4 diesen Parametersatz und können damit auch den Hashwert H als Bestandteil der Identifikationsnummer ID unabhängig voneinander berechnen.

Dies wird nun im dritten Schritt S3 ausgenützt. Hier berechnet die Numerische Steuerung NC sowohl die Routing-Information R als auch den Hashwert H über die Parameter und sonstige Umgebungsbedingungen im Peripheriegerät U4 und bildet so die Identifikationsnummer ID für ein zweites Datentelegramm T2, mit dem eine Anforderung zur Übertragung einer Information an das Peripheriegerät U4 gesendet wird.

In einem vierten Schritt empfängt das Peripheriegerät U4 dieses zweite Datentelegramm T2. Außerdem berechnet es die Identifikationsnummer ID als Erwartungswert anhand der lokal vorhandenen Parameter und Umgebungsbedingungen und vergleicht diesen Erwartungswert mit der im zweiten Datentelegramm T2 übermittelten Identifikationsnummer ID. Bei einer Abweichung dieser beiden Identifikationsnummern wird ein Fehler erkannt und beispielsweise mit einer Abschaltung der Werkzeugmaschine WZM reagiert. Stimmen jedoch beide Identifikationsnummern ID überein, so ist sichergestellt, dass sowohl das korrekte Peripheriegerät U4 angesprochen wurde, als auch dass die Parametrierung des Peripheriegerätes U4 mit der von der Numerischen Steuerung NC vorgegebenen bzw. angenommenen Parametrierung übereinstimmt. Falls Typbezeichnungen von Hardwarekomponenten des Peripheriegerätes U4 im Hashwert H verarbeitet werden, so ist auch sichergestellt, dass die erwartete Hardware vorhanden ist und nicht etwa bei einer Wartung falsche Komponenten verbaut wurden.

Im vierten Schritt S4 wird außerdem ein drittes Datentelegramm T3 mit der Antwort auf die Anforderung einer Information im zweiten Datentelegramm T2 erstellt. Das dritte Datentelegramm T3 enthält also mindestens diese angeforderte Information, und evtl. noch zusätzliche Informationen, die zusammen als Nutzdaten P zur Numerischen Steuerung NC übertragen werden.

Die Identifikationsnummer ID dieses dritten Datentelegramms T3 wird von der Peripherieeinheit U4 nach der gleichen Vorschrift gebildet wie die im zweiten Datentelegram T2. Die Identifikationsnummer ID ist also eine Information über den Absender des dritten Datentelegramms T3. Die Numerische Steuerung NC kann diese Identifikationsnummer ID wiederum anhand des dort vorhandenen Wissens über die Routinginformation R vom Absender und dessen Umgebungsbedingungen überprüfen. Die Numerische Steuerung NC kann sich also vergewissern, dass das dritte Datentelegramm tatsächlich vom angenommenen Absender, dem Peripheriegerät U4 stammt.

Dank der erfindungsgemäß verwendeten Identifikationsnummer ID und der von Sender und Empfänger eingenommenen Erwartungshaltung kann also die Kommunikation zwischen beiden abgesichert werden. Zusätzlich können bestimmte Umgebungsbedingungen und Parameter der Peripheriegeräte U1, U2, U3, U4, U5, U6, U7, U8, U9 auf ungewollte Änderungen überwacht werden, wenn diese im Hashwert H verarbeitet werden.

Der Hashwert H wird dabei mit üblichen kryptographischen Methoden berechnet und ist so auch gegen Manipulationsversuche im Netzwerk N abgesichert. Beispiele für geeignete kryptographische Methoden sind die unter den Bezeichnungen MD5, CRC oder auch SHA-1 bekannten Verfahren.

## Patentansprüche

1. Verfahren zur sicheren Datenkommunikation an einer numerisch gesteuerten Werkzeugmaschine, mit einer als Sender fungierenden Numerischen Steuerung (NC), die über ein digitales Netzwerk (N) zum Austausch von Datentelegrammen (T, T1, T2, T3) mit einer Mehrzahl von als Empfänger fungierenden Peripheriegeräten (U1, U2, U3, U4, U5, U6, U7, U8, U9) verbunden ist, denen jeweils eine eindeutige Identifikationsnummer (ID) zugeordnet ist, **dadurch gekennzeichnet, dass** diese Identifikationsnummer (ID) sowohl von der Steuerung (NC) als auch vom Peripheriegerät (U1, U2, U3, U4, U5, U6, U7, U8, U9) für jede Übertragung eines solchen Datentelegramms (T, T1, T3) neu berechnet und zu einem Bestandteil des Datentelegramms (T, T1, T2, T3) wird, wobei die Identifikationsnummer (ID) neben Routing-Informationen (R), die den Weg des Datentelegramms (T, T1, T3) von der Steuerung (NC) zum Peripheriegerät (U1, U2, U3, U4, U5, U6, U7, U8, U9) beschreiben, zusätzlich einen Hashwert (H) über lokale, das Peripheriegerät (U1, U2, U3, U4, U5, U6, U7, U8, U9) charakterisierende Daten umfasst, und wobei die das Peripheriegerät (U1, U2, U3, U4, U5, U6, U7, U8, U9) charakterisierenden Daten, die zur Bildung des Hashwert (H) herangezogen werden, Parameter umfasst, mit denen das Peripheriegerät (U1, U2, U3, U4, U5, U6, U7, U8, U9) parametriert ist, und wobei die vom Sender berechnete und mit dem Datentelegramm (T, T1, T3) übermittelte Identifikationsnummer (ID) des Empfängers mit der vom Empfänger berechneten Identifikationsnummer (ID) des Empfängers verglichen wird, und dass bei einer Abweichung der beiden miteinander verglichenen Identifikationsnummern (ID) eine Fehlerreaktion ausgelöst wird.

2. Verfahren nach Anspruch 1, wobei die Rolle des Senders von einem Peripheriegerät (U1, U2, U3, U4, U5, U6, U7, U8, U9) übernommen wird und die Rolle des Empfängers von der Numerischen Steuerung (NC) übernommen wird, und wobei die Identifikationsnummer (ID) des Peripheriegeräts (U1, U2, U3, U4, U5, U6, U7, U8, U9) Bestandteil des Datentelegramms (T3) ist.

3. Numerische Steuerung für eine Werkzeugmaschine mit mehreren Peripheriegeräten (U1, U2, U3, U4, U5, U6, U7, U8, U9), wobei die Numerische Steuerung (NC) und die Peripheriegeräte (U1, U2, U3, U4, U5, U6, U7, U8, U9) eingerichtet sind für ein Verfahren zur Datenkommunikation nach Anspruch 1 oder 2.

## Claims

1. Method for secure data communication on a numerically controlled machine tool, having a numerical controller (NC), acting as transmitter, that is connected via a digital network (N), for the purpose of exchanging data telegrams (T, T1, T2, T3), to a plurality of peripheral devices (U1, U2, U3, U4, U5, U6, U7, U8, U9), acting as receivers, that each have an associated unique identification number (ID), **characterized in that** this identification number (ID) is recalculated both by the controller (NC) and by the peripheral device (U1, U2, U3, U4, U5, U6, U7, U8, U9) for each transmission of such a data telegram (T, T1, T3) and becomes part of the data telegram (T, T1, T2, T3), wherein the identification number (ID) comprises not only routing information (R), which describes the path of the data telegram (T, T1, T3) from the controller (NC) to the peripheral device (U1, U2, U3, U4, U5, U6, U7, U8, U9), but additionally a hash value (H) for local data characterizing the peripheral device (U1, U2, U3, U4, U5, U6, U7, U8, U9), and wherein the data characterizing the peripheral device (U1, U2, U3, U4, U5, U6, U7, U8, U9) that are used to form the hash value (H) comprise parameters that have been used to parameterize the peripheral device (U1, U2, U3, U4, U5, U6, U7, U8, U9), and wherein the identification number (ID) of the receiver calculated by the transmitter and conveyed with the data telegram (T, T1, T3) is compared with the identification number (ID) of the receiver calculated by the receiver, and **in that** a difference between the two identification numbers (ID) that have been compared with one another results in an error reaction being triggered.

2. Method according to Claim 1, wherein the role of the transmitter is undertaken by a peripheral device (U1, U2, U3, U4, U5, U6, U7, U8, U9) and the role of the receiver is undertaken by the numerical controller (NC), and wherein the identification number (ID) of the peripheral device (U1, U2, U3, U4, U5, U6, U7, U8, U9) is part of the data telegram (T3).

3. Numerical controller for a machine tool having multiple peripheral devices (U1, U2, U3, U4, U5, U6, U7, U8, U9), wherein the numerical controller (NC) and the peripheral devices (U1, U2, U3, U4, U5, U6, U7, U8, U9) are designed for a method for data communication according to Claim 1 or 2.

## Revendications

1. Procédé de communication de données sécurisée sur une machine-outil à commande numérique, comprenant une commande numérique (NC) servant d'émetteur et étant reliée par un réseau numérique (N) pour l'échange de télégrammes de données (T, T1, T2, T3) à une pluralité de dispositifs périphériques (U1, U2, U3, U4, U5, U6, U7, U8, U9) servant de récepteurs et qui sont respectivement associés à un numéro d'identification (ID) univoque,
**caractérisé en ce que** ce numéro d'identification (ID) est recalculé à la fois par la commande (NC) et par le dispositif périphérique (U1, U2, U3, U4, U5, U6, U7, U8, U9) pour chaque transmission d'un tel télégramme de données (T, T1, T3) et devient partie intégrante du télégramme de données (T, T1, T2, T3), le numéro d'identification (ID) comprenant outre des informations de routage (R) qui décrivent le chemin du télégramme de données (T, T1, T3) de la commande (NC) au dispositif périphérique (U1, U2, U3, U4, U5, U6, U7, U8, U9) en plus une valeur de hachage (H) concernant des données locales caractérisant le dispositif périphérique (U1, U2, U3, U4, U5, U6, U7, U8, U9), et les données caractérisant le dispositif périphérique (U1, U2, U3, U4, U5, U6, U7, U8, U9) qui sont utilisées pour former la valeur de hachage (H) comprennent des paramètres à l'aide desquels le dispositif périphérique (U1, U2, U3, U4, U5, U6, U7, U8, U9) est paramétré, et le numéro d'identification (ID) du récepteur, calculé par l'émetteur et transmis avec le télégramme de données (T, T1, T3), étant comparé au numéro d'identification (ID) du récepteur, calculé par le récepteur, et **en ce qu'**en cas d'écart entre les deux numéros d'identification (ID) comparés l'un à l'autre, une réaction d'erreur est déclenchée.

2. Procédé selon la revendication 1, dans lequel le rôle de l'émetteur est pris en charge par un dispositif périphérique (U1, U2, U3, U4, U5, U6, U7, U8, U9) et le rôle du récepteur est pris en charge par la commande numérique (NC), et dans lequel le numéro d'identification (ID) du dispositif périphérique (U1, U2, U3, U4, U5, U6, U7, U8, U9) fait partie intégrante du télégramme de données (T3).

3. Commande numérique pour une machine-outil comprenant plusieurs dispositifs périphériques (U1, U2, U3, U4, U5, U6, U7, U8, U9), la commande numérique (NC) et les dispositifs périphériques (U1, U2, U3, U4, U5, U6, U7, U8, U9) étant aménagés pour un procédé de communication de données selon la revendication 1 ou 2.
